# EUROPEAN PATENT APPLICATION

(11) **EP 3 000 617 A1**
(43) Date of publication of application: **30.03.2016**
(21) Application number: 15183523.8
(22) Date of filing: 02.09.2015
(51) Int. Cl.: B60C 1/00, B60C 11/00

(54) **TIRE WITH DIRECTIONAL HEAT CONDUCTIVE CONDUIT**

(30) Priority: 23.09.2014 US 201414493442
(71) Applicant: The Goodyear Tire & Rubber Company, Akron, Ohio 44316 (US)
(72) Inventor: ZHAO, Junling, Hudson, OH 44236 (US); ANDERSON, Norman David, Hartville, OH 44632 (US); YAP, Pedro, Silver Lake, OH 44224 (US)
(74) Representative: Kutsch, Bernd

(57) **Abstract**

A pneumatic tire comprising a directional heat conductive conduit comprising at least one heat conductive tire component (10, 11, 12) is disclosed. The heat conductive tire conduit extends from an internal portion of the tire (1) to an external surface (9) of the tire. At least one of said heat conductive tire component contains an outer atmospherically exposed surface of the tire (1). Said at least one heat conductive tire component of said directional conduit has a heat conductivity of at least 0.6 W/mK and contains a dispersion of heat conductive particles comprising at least one of exfoliated graphite platelets, carbon nanotubes, acetylene carbon black, boron nitride powder, carbonyl nickel powder, Al₂O₃, SiC, LiClO₄, zinc oxide and metal particles comprising at least one of nickel, copper, aluminum and iron powders.

## Description

### Field of Invention

This invention relates to a tire containing a directional heat conductive conduit comprising at least one tire component for conducting internally generated heat to an external surface of the tire for dissipation of the conducted heat.

### Background of the Invention

Pneumatic rubber tires generate internal heat, such as for example, by flexing, as the tire is being worked during service. Further, heat is not generated internally equally throughout the tire due, for example, to some components of the tire flexing more than others during the tire service as well as some components being volumetrically larger than others to thereby generate or store heat disproportionally. Therefore, some components of the tire may tend to run hotter than others. Accordingly, internal conduction combined with external dissipation of internally generated heat is desired.

Historically, a longitudinal element comprising a rubber composition containing an appreciable content of carbon nanotubes aligned in a parallel, end-to-end, or overlapping relationship with each other has been suggested to extend through a tire component for conduction of heat from an interior of a tire to the tire's outer surface. For example, see US-A-2006/0061011. However, for this invention, it is desired to provide a directional heat conductive conduit comprising one or more of an entire tire rubber component which contains a particulate heat conductive dispersion throughout the tire component. Representative of such tire components are for example, external (atmospherically exposed) tire components comprising at least one of a tire rubber sidewall, peripheral tread shoulder rubber component and groove(s) contained in an outer tread cap rubber layer individually and combined with at least one of each other or with a tread base rubber layer to form said heat conductive conduit, as well as a heat conductive conduit comprised of a tire chafer component.

Also, historically, rubber containing dispersions of acetylene carbon black have been proposed to provide a heat conduction in a tire. For example, see US-B-7,337,815.

As indicated, for this invention, it is desired to provide a directional heat conductive a conduit as a heat conductive path to enable dissipation of heat from an outer surface of a tire which has been directed by a heat conductive conduit composed of at least one tire component (which may include a combination of tire components) from an internal portion of a tire to an outer surface of the tire instead of by a heat conductive element which extends through a tire component without including the entire tread component.

In the description of this invention, the term "phr" is used to designate parts by weight of a material per 100 parts by weight of elastomer. The terms "rubber" and "elastomer" may be used interchangeably unless otherwise indicated. The terms "vulcanized" and "cured" may be used interchangeably, as well as "unvulcanized" or "uncured", unless otherwise indicated.

### Summary and Practice of the Invention

The invention relates to a tire in accordance with claim 1.

Dependent claims refer to preferred embodiments of the invention.

In accordance with this invention, a pneumatic rubber tire is provided which contains a directional heat conductive rubber conduit comprising at least one heat conductive tire component where said heat conductive tire conduit extends from an internal portion of the tire to an external surface of the tire (to thereby direct internally generated heat from an internal portion of the tire to a tire external surface for atmospheric dissipation of the conducted heat), and where at least one of said heat conductive tire components contains an outer atmospherically exposed surface of the tire.

In one embodiment, the said heat conductive tire conduit comprises at least two interconnecting (thereby joined, or linked together) heat conductive tire components (to facilitate heat to be conducted through both of the tire components). In such embodiment, the heat conductive tire components may be interconnected in series to facilitate conduction of the heat sequentially through each of the tire components or may interconnected in a parallel configuration to facilitate the transfer of heat simultaneously through the interconnected tire components.

In practice, the rubber composition of said heat conductive tire component has a heat conductivity of at least 0.6, alternately at least 1 W/mK (Watts/meter Kelvin degrees temperature) and preferably at least 0.3 W/mK greater than tire rubber components which are joined to said heat conductive tire component(s).

In one embodiment, the rubber composition of said heat conductive tire component(s) contains a dispersion of heat conductive particles sufficient to provide such heat conductivity comprising at least one of: exfoliated graphite platelets, carbon nanotubes, acetylene carbon black, boron nitride powder, carbonyl nickel powder, Al₂O₃, SiC, LiClO₄, zinc oxide and metal particles (e.g. at least one of nickel, copper, aluminum and iron powders).

Representative examples of such heat conductive tire components are at least one of tread base rubber layer component, tread peripheral shoulder component, tire sidewall component and tire chafer component, exclusive of a running surface of the tire tread.

The pneumatic rubber tire conventionally comprises a circumferential rubber tread of a cap/base construction comprising an outer tread cap rubber component configured with lugs and intervening grooves where an outer surface of the tread lugs contains the running surface of the tire, an underlying tread base rubber layer component (underlying the outer tread cap rubber layer) where said tread may optionally contain a lateral peripheral tread shoulder component; two spaced apart beads, a pair of tire rubber sidewall components and a tire rubber chafer component (to fit against a rigid wheel rim).

Representative examples of such heat conduit comprises heat conductive tire components comprising at least one of tread base rubber layer component, tread peripheral shoulder component, tire sidewall component and tire chafer component, and combinations thereof comprising:
(A) a tire sidewall outer rubber layer (with atmospherically exposed outer surface to enable dissipation of heat conducted from an internal portion of the tire) and tread base rubber layer component (to enable conduction of internally generated from within the tire to the outer sidewall layer), and
(B) a tread peripheral shoulder component (with atmospherically exposed surface to enable dissipation of heat conducted from an internal portion of the tire) and tread base rubber layer component (to enable conduction of internally generated from within the tire to the tread peripheral shoulder component).

In one embodiment, said rubber composition of said heat conductive rubber component is a product of blending a pre-formed masterbatch comprising at least one conjugated diene-based elastomer and exfoliated graphite platelets with the same or at least one additional conjugated diene-based elastomer.

In one embodiment, said conduit of heat conductive tire component comprises one or more of:
(A) the tread base rubber layer tire component which extends axially outward from an internal portion of the tire axially outward to and including an external surface of the tire sidewall,
(B) a combination of the tread base rubber layer tire component which extends axially outward from an internal portion of the tire to and including an outer tire sidewall rubber layer tire component containing an external surface of the tire,
(C) a combination of the tread base rubber layer tire component which extends axially outward from an internal portion of the tire to and including a peripheral tread rubber shoulder tire component of the tire containing an external surface of the tire,
(D) a tread rubber shoulder tire component containing an external tire surface,
(E) a tread base rubber layer tire component having a portion which extends radially outward to include an external tread groove surface in the outer tread cap rubber layer exclusive of a running surface of the tire, and
(F) a tire chafer rubber layer tire component containing an outer tire rubber surface.

A significant aspect of the invention is the providing and placement of heat conductive conduit in a manner to provide a path of directional heat conductivity to conduct heat from within the tire to an external surface of the tire for dissipation of the internally generated heat.

In one embodiment, the heat conducting rubber component comprises at least one diene-based elastomer and containing a dispersion therein of from 0.5 to 60, alternately from 3 to 30, parts by weight per 100 parts by weight of said elastomer (phr) so long as said heat conducting rubber has a heat has a heat conductivity of at least 0.6, alternately at least 1 W/mK.

In one embodiment the rubber composition of said heat conductive tire component comprises:
(A) 100 phr of at least one diene-based elastomer,
(B) from 20 to 120, alternately 30 to 120 phr of particulate reinforcing filler comprising:
   (1) rubber reinforcing carbon black,
   (2) precipitated silica (synthetic amorphous silica), or
   (3) combination of rubber reinforcing carbon black and precipitated silica (e.g. containing at least 10 phr of precipitated silica);
(C) a silica coupling agent for said precipitated silica (when precipitated silica is used) containing a moiety reactive with hydroxyl groups (e.g. silanol groups) on said precipitated silica and another, different, moiety interactive with said diene based elastomer(s), and
(D) from 0.5 to 60, alternately 3 to 30 phr of heat conductive particles sufficient to provide a heat conductivity for the heat conductive tire component in a range of at least 0.6, alternately at least 1 W/mK, comprising at least one of exfoliated graphite platelets, carbon nanotubes, acetylene carbon black, boron nitride powder, carbonyl nickel powder, Al₂O₃, SiC, LiClO₄, zinc oxide and metal particles (e.g. at least one of nickel, copper, aluminum and iron powders).

Exfoliated graphite platelets may be provided as a product of exfoliated, intercalated graphite in a form of irregular shaped platelets. Such platelets may have an average lateral dimension, for example, in a range of from 0.1 to 1 micrometers. Carbon nanotubes may be nano sized cylindrically shaped particles having as average diameter in a range of, for example, from 1 to 100 nanometers and an average L/D (length to diameter), for example, in a range of from 10/1 to 10,000/1. For example, see US-B- 7,479,516, US-B-6,476,154 and US-A-2011/0146859, US-A-2010/0078194, US-A-2006/0229404 and US-A-2006/0061011.

Acetylene carbon black is reportedly made by exothermic decomposition of acetylene (The Vanderbilt Rubber Handbook, (1978) Page 411).

As indicated, representative of metal particles (e.g. powder) is, for example, at least one of nickel, copper, aluminum and iron powders.

Drawings are provided for a further understanding of the invention to illustrate positional heat conductive rubber conduits in a form of tire components, which contain a dispersion of heat conductive particles (as hereinbefore described) sufficient to provide a heat conductivity of at least 0.6 and alternately at least 1 W/mK, which conduct internally generated heat from an internal portion of the tire to the tire's outer atmospherically exposed surface for dissipation of the heat into the atmosphere. At least one of the components of the directional heat conductive conduit contains an outer surface of the tire (to enable dissipation of the conducted heat from the tire).

### Brief Description of the Drawings

The invention will be described by way of example and with reference to the accompanying drawings in which:
Figure 1 (FIG 1) is a cross-sectional view of a pneumatic tire.
Figure 2 (FIG 2) is a partial cross-sectional view of a pneumatic tire.
Figure 3 (FIG 3) is a partial cross-sectional view of a pneumatic tire.
Figure 4 (FIG 4) is a partial cross-sectional view of a pneumatic tire.
Figure 5 (FIG 5) is a partial cross-sectional view of a pneumatic tire.
Figure 6 (FIG 6) is a partial cross-sectional view of a pneumatic tire.
Figure 7 (FIG 7) is a partial cross-sectional view of a pneumatic tire.

### The Drawings

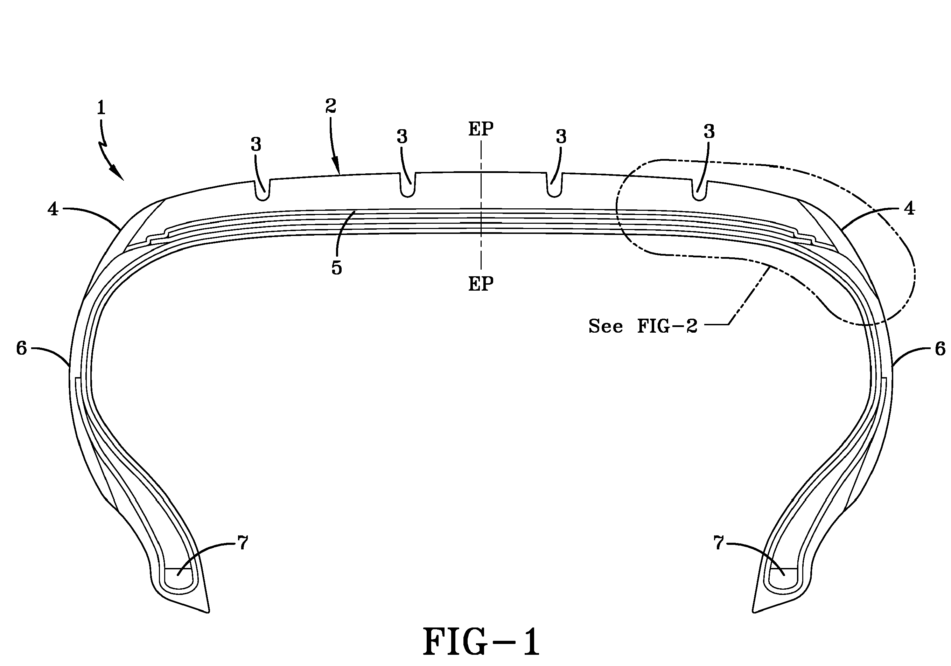

FIG 1 illustrates a cross section of a pneumatic tire 1 having a tread composed of an outer running surface-containing tread rubber cap layer component 2 configured with ground-contacting, running surfaced lugs and intervening grooves 3, peripheral tread shoulder, sometimes referred to as a tread wing, component, 4 containing an outer surface of the tire and abridging the tread cap rubber layer 2 and tire rubber sidewall 6 which extends from a tread shoulder component 4 to a bead portion 7.

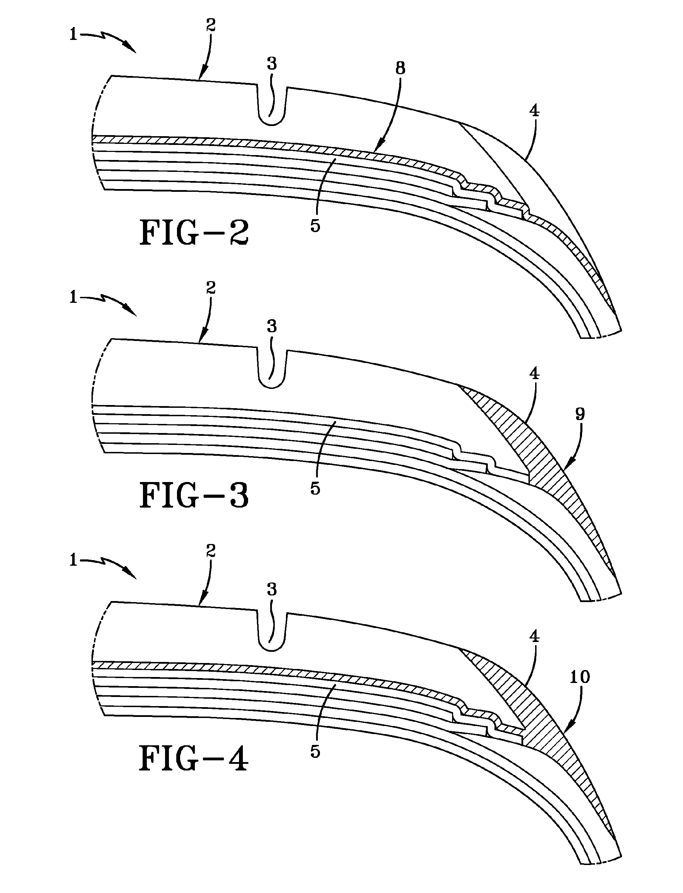

FIGs 2 through 7 are provided to illustrate a tire containing a heat conductive rubber conduit composed of at least one rubber tire component which contains in a range of from 0.5 to 30 phr of heat conductive particles sufficient to provide a heat conductivity for the heat conductive tire component of said heat conductive conduit in a range of at least 0., alternately at least 1, W/mK, comprising at least one of exfoliated graphite platelets, carbon nanotubes, acetylene carbon black and metal powder.

FIG 2 illustrates a directional heat conductive rubber conduit 8 as an intermediate tread base rubber layer component 8 which extends between the outer tread cap rubber layer 2 and primary tread base rubber 5 to provide a path of directional conducting heat internally generated from the interior of the tire 1, as well as beneath a tread shoulder 4, to its outer surface, other than to the running surface of the tire tread outer cap rubber layer 2 to promote directional conduction and dissipation of the internally generated heat from the tire 1. It is recognized that a significant driver of the heat dissipation is a temperature difference between the associated interior of the tire and outside tire sidewall surface.

FIG 3 illustrates a directional heat conductive element as a peripheral tread shoulder, or wing (4) where the inner portion of the tread wing 4 constitutes a portion of the interior of the tire to provide a path to directionally conduct internally generated heat from the interior of the tire 1 to its outer surface, namely to an outer surface 9 of its tread wing component 4 to promote directional dissipation of the internally generated heat. It is recognized that a significant driver of the heat dissipation is a temperature difference between the associated interior of the tire and outside tire surface.

FIG 4 illustrates a directional heat conductive element 10 as a unitized combination of the directional heat conductive intermediate tread base layer component 8 as illustrated in FIG 2 and peripheral tread shoulder, or wing component 4.

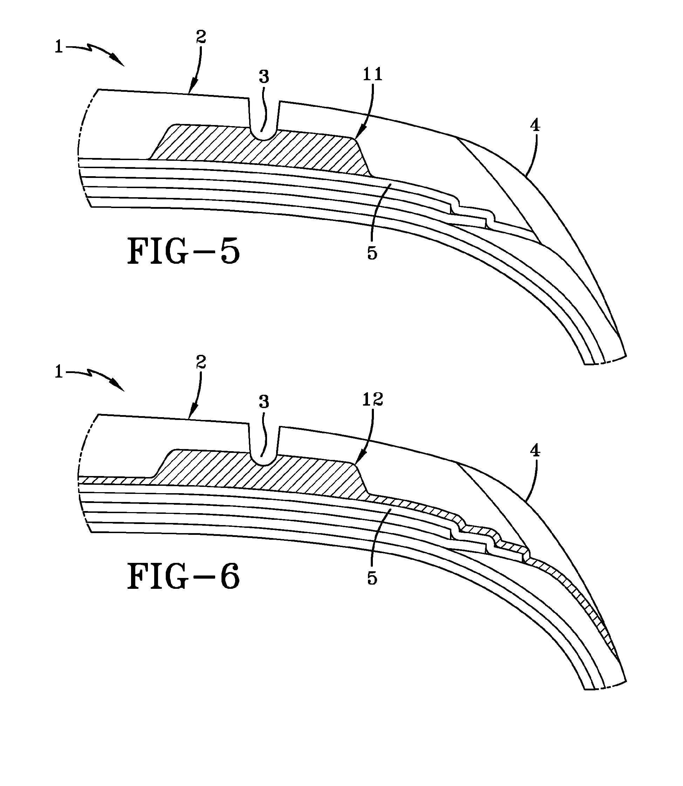

FIG 5 illustrates a directional heat conductive element as an internal tread block 11 as a portion of the tread base rubber layer 5 which extends radially outward from its tread base rubber layer 5 into a portion of the tread cap rubber layer 2 to include a portion of a tread groove surface 3, without extending to the outer running surface of the tread rubber cap 2, to thereby provide a path of heat conductivity from an internal portion of the tire 1 to an outer tire tread groove surface 3 exclusive of a running surface of the tire to promote dissipation of internally generated heat from the tire.

FIG 6 illustrates a directional heat conductive element as an internal tread element 12 as a unitized combination with the underlying intermediate heat conductive tread base rubber layer 8 illustrated in FIG 2.

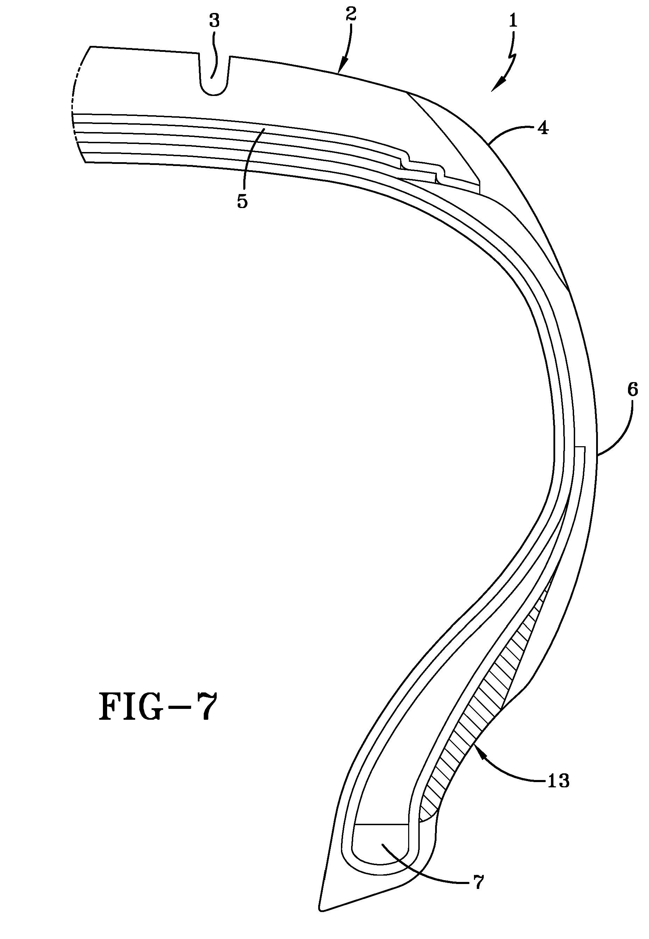

FIG 7 illustrates a directional heat conductive element as a rubber chafer component 13 of the tire 1 extending from an inner portion of the tire to an outer chafer surface of the tire in the region of bead component 7 and tire sidewall 6 which might be considered by some as a part of the sidewall 6. The inner portion of the chafer component 13 extends to the interior of the tire to provide a path to directionally conduct internally generated heat from the interior of the tire (1) to an outer surface of the tire, namely to an outer surface of its chafer component 13 to promote directional dissipation of the internally generated heat from the tire 1 from its chafer component 13.

In practice, various diene-based elastomers may be used for the rubber composition said tire tread base rubber layer and said tire rubber skirt component such as, for example, polymers and copolymers comprised of at least one monomer comprised of at least one of isoprene and 1,3-butadiene and from styrene copolymerized with at least one of isoprene and 1,3-butadiene.

Representative of such conjugated diene-based elastomers are, for example, comprising at least one of cis 1,4-polyisoprene (natural and synthetic), cis 1,4-polybutadiene, styrene/butadiene copolymers (aqueous emulsion polymerization prepared and organic solvent solution polymerization prepared), medium vinyl polybutadiene having a vinyl 1,2-content in a range of 15 to 90 percent, isoprene/butadiene copolymers, styrene/ isoprene/butadiene terpolymers and butadiene/acrylonitrile copolymers.

In one aspect, the conjugated diene-based elastomer may be an elastomer such as, for example, styrene/butadiene copolymer, containing at least one functional group reactive with hydroxyl groups on a precipitated silica such as, for example, comprising at least one of amine, siloxy, thiol, imine and hydroxyl groups.

Representative of functionalized elastomers are, for example, styrene/butadiene elastomers containing one or more functional groups comprising:
(A) amine functional group reactive with hydroxyl groups on said precipitated silica,
(B) siloxy functional group, including end chain siloxy groups, reactive with hydroxyl groups on said precipitated silica,
(C) combination of amine and siloxy functional groups reactive with hydroxyl groups on said precipitated silica,
(D) combination of thiol and siloxy (e.g. ethoxysilane) functional groups reactive with hydroxyl groups on said precipitated silica,
(E) combination of imine and siloxy functional groups reactive with hydroxyl groups on said precipitated silica, and
(F) hydroxyl functional groups reactive with said precipitated silica.

For the functionalized elastomers, representative of amine functionalized SBR elastomers are, for example, in-chain functionalized SBR elastomers mentioned in US-B-6,936,669.

Representative of a combination of amino-siloxy functionalized SBR elastomers with one or more amino-siloxy groups connected to the elastomer is, for example, HPR355™ from JSR and amino-siloxy functionalized SBR elastomers mentioned in US-A-2007/0185267.

Representative styrene/butadiene elastomers end functionalized with a silane-sulfide group are, for example, mentioned in WO-A-2007/047943.

Tin coupled elastomers may also be used, such as, for example, tin coupled organic solution polymerization prepared styrene/butadiene co-polymers, isoprene/butadiene copolymers, styrene/isoprene copolymers, polybutadiene and styrene/isoprene/butadiene terpolymers as well as said functionalized styrene/butadiene elastomers.

Commonly employed synthetic amorphous silica, or siliceous pigments, used in rubber compounding applications can be used as the precipitated silica for this invention.

The precipitated silica aggregates employed in this invention are typically obtained by the acidification of a soluble silicate, e.g., sodium silicate and may include co-precipitated silica and a minor amount of aluminum. Such synthetic, amorphous silicas are generally referred to as "precipitated silicas".

Such precipitated silicas might usually be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60 (1938), as well as ASTM D5604 for precipitated silica.

The silica may also be typically characterized, for example, by having a dibutylphthalate (DBP) absorption value in a range of 50 to 400 cc/100g, and more usually 100 to 300 cc/100g (ASTM D2414).

Various commercially available precipitated silicas may be considered for use in this invention such as silicas from PPG Industries under the Hi-Sil trademark with designations Hi-Sil 210 and Hi-Sil 243, silicas from Solvay as, for example, Zeosil 1165MP and Zeosil 165GR, silicas from Evonic with, for example, designations VN2 and VN3, as well as other grades of silica, particularly precipitated silicas, which can be used for elastomer reinforcement.

Various coupling agents, as previously described, may be used if desired to aid in coupling the silica (e.g. precipitated silica with hydroxyl groups on its surface), as well as interacting with said functionalized exfoliated graphene platelets.

In practice, the coupling agent for the precipitated silica reinforcement of the respective zones of the tread may be, for example, an alkoxysilyl polysulfide such as for example, a bis(3-trialkoxysilylalkyl) polysulfide wherein alkyl radicals for said alkoxy groups are selected from one or more of methyl and ethyl radicals, preferably an ethyl radical and the alkyl radical for said silylalkyl component is selected from butyl, propyl and amyl radicals, preferably a propyl radical and wherein said polysulfide component contains from 2 to 8, with an average of from 2 to 2.6 or an average of from 3.5 to 4, connecting sulfur atoms in its polysulfidic bridge, preferably an average of from 2 to 2.6 connecting sulfur atoms.

Representative of such coupling agents are, for example, bis(3-triethoxysilylpropyl) polysulfide having an average of from 2 to 2.6 or an average of from 3.5 to 4, connecting sulfur atoms in its polysulfidic bridge, sometimes preferably an average of from 2 to 2.6 connecting sulfur atoms..

Such coupling agent may, for example, be added directly to the elastomer mixture or may be added as a composite of precipitated silica and such coupling agent formed by treating a precipitated silica therewith or by treating a colloidal silica therewith and precipitating the resulting composite.

Representative examples of other silica couplers may be alkoxyorganomercaptosilanes such as, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

In one embodiment, the precipitated silica may be a pre-treated (treated prior to adding to the rubber composition) precipitated silica with at least one of bis(3-triethoxysilylpropyl) polysulfide containing an average of from 2 to 4 sulfur atoms in its polysulfidic bridge and of a alkoxyorganomercaptosilane.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing fillers materials such as, for example, the aforementioned rubber reinforcing carbon black and precipitated silica. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, may, for example, comprise 0.5 to 10 phr, usually 1 to 5 phr. Typical amounts of processing aids, if used, may comprise, for example from 1 to 50 phr. Such processing aids can include, for example and where appropriate, aromatic, naphthenic, and/or paraffinic processing oils. Typical amounts of antioxidants where used may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, where used, may comprise for example 1 to 5 phr. Typical amounts of fatty acids, if used, which can include stearic acid and combinations of stearic acid with one or more of palmitic acid oleic acid and may comprise, for example, from 0.5 to 3 phr. Typical amounts of zinc oxide may comprise, for example, from 1 to 10 phr. Typical amounts of waxes, such as for example microcrystalline waxes, where used, may comprise, for example, from 1 to 5 phr. Typical amounts of peptizers, where used, may comprise, for example, from 0.1 to 1 phr.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents may be used, for example, in an amount ranging from 0.5 to 4 phr, or even, in some circumstances, up to 8 phr.

Sulfur vulcanization accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging, for example, from 0.5 to 4, alternately 0.8 to 1.5 phr. In another embodiment, combinations of a primary and a secondary accelerator might be used with the secondary accelerator, where used, being usually used in smaller amounts (for example 0.05 to 3 phr) in order to activate and to improve the properties of the vulcanizate. Combinations of these accelerators might be expected to produce a synergistic effect on the final properties and are somewhat better than those produced by use of either accelerator alone. In addition, delayed action accelerators may be used, for example, which are not affected by normal processing temperatures but produce a satisfactory cure at ordinary vulcanization temperatures. Vulcanization retarders might also be used, where desired or appropriate. Suitable types of accelerators that may be used in the present invention may be, for example, amines, disulfides, guanidines, thioureas, thiazoles, thiurams, sulfenamides, dithiocarbamates and xanthates. Preferably, the primary accelerator is a sulfenamide. If a second accelerator is used, the secondary accelerator may be, for example, a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage.

The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, and reinforcing fillers, including the exfoliated graphene platelets and alternative additional reinforcing fillers such as, for example precipitated silica and rubber reinforcing carbon black mixed in one or more non-productive mix stages.

The following Example is presented to illustrate one aspect of the invention. The parts and percentages are by weight unless otherwise designated.

### EXAMPLE I

An exemplary control rubber Sample A and exemplary experimental rubber Sample B are provided to illustrate preparation of a heat conductive graphite platelet-containing rubber composition suitable as an example of a heat conductive tire component for a heat conductive conduit of this invention.

Control rubber Sample A used reinforcing filler as rubber reinforcing carbon black.

Experimental rubber Sample B was prepared by blending a masterbatch of diene-based elastomers and graphite platelets followed by blending the masterbatch with diene-based elastomers.

The basic formulation for the rubber Sample A and rubber Sample B are illustrated in the following Table 1 where the ingredients are expressed in terms of parts by weight per 100 parts of rubber (phr) unless otherwise indicated.

The rubber compositions may be prepared, for example, by mixing the elastomers(s), which may include a masterbatch, without sulfur and sulfur cure accelerators in a first non-productive mixing stage (NP-1) in an internal rubber mixer for 4 minutes, for example, to an elevated temperature. If desired, the rubber mixture may then mixed in a second non-productive mixing stage (NP-2) in an internal rubber mixer for 4 minutes, for example, to an elevated temperature, sometimes without adding additional ingredients. The resulting rubber mixture may then mixed in a productive mixing stage (PR) in an internal rubber mixer with sulfur and sulfur cure accelerator(s) for 2 minutes, for example, to a lower temperature of, for example, 110°C. The rubber composition may then sheeted out and cooled to below 50°C between each of the non-productive mixing steps and prior to the productive mixing step. Such rubber mixing procedure is well known to those having skill in such art.

**Table 1**

| Non-Productive Mixing Step (NP1) | Parts (phr) |
|---|---|
| Synthetic cis 1,4-polyisoprene rubber¹ | 100 |
| Masterbatch, synthetic cis 1,4-polyisoprene rubber with graphite loading² | 115 |
| Graphite platelets in masterbatches | 15 |
| Carbon black, rubber reinforcing (N205)³ | 20 or 0 |
| Wax, microcrystalline and paraffin | 1.5 |
| Fatty acid⁴ | 2 |
| Antioxidant(s) | 3 |
| Zinc oxide | 3 |

| Productive Mixing Step (PR) | |
|---|---|
| Sulfur | 2.6 |
| Accelerator(s)⁸ | 1.4 |

| | |
|---|---|
| ¹Synthetic cis 1,4-polyisoprene rubber as Natsyn 2200™ from The Goodyear Tire & Rubber Company ²Pre-blends of graphite platelets (stacked platelets) and synthetic cis 1,4-polyisoprene as Natsyn 2200™ from The Goodyear Tire & Rubber Company containing 15 phr of graphite platelets ³Rubber reinforcing carbon black as N205, an ASTM designation ⁴Mixture of fatty acids comprised of stearic, palmitic and oleic acids ⁵Sulfenamide and diphenyl guanidine sulfur cure accelerators | |

The following Table 2 represents the uncured and cured behavior and various physical properties of the rubber compositions based upon the basic formulation of Table 1, and reported for Control rubber Sample A and Experimental rubber Samples B.

**Table 2**

| | Control A (phr) | Experimental B (phr) |
|---|---|---|
| Synthetic cis 1,4-polyisoprene | 100 | 0 |
| Masterbatches with graphite | 0 | 115 |
| Synthetic cis 1,4-polyisoprene | 0 | 100 |
| Graphite platelets | 0 | 15 |
| Carbon black (N205) | 20 | 0 |

| Properties | | |
|---|---|---|
| MDR test: 60 minutes at 150°C | | |
| Maximum torque (dNm) | 13.6 | 13.5 |
| Minimum torque (dNm) | 1.8 | 0.49 |
| T90 (minutes) | 10 | 12.3 |
| | | |

| RPA test (Rubber Process Analyzer) at 10% strain. 11 Hertz. 100°C | | |
|---|---|---|
| Storage modulus G' (Pa) | 907 | 849 |
| Tan delta | 0.048 | 0.05 |
| | | |

| Stress-strain | | |
|---|---|---|
| Tensile strength (MPa) | 21.2 | 14.6 |
| Elongation at break (%) | 558 | 418 |
| 300% modulus, ring, (MPa) | | 5.3 |
| | | |
| Thermal conductivity (W/mK)¹ sulfur cured rubber composition | 0.2 | 0.63 |

| | | |
|---|---|---|
| ¹Thermal conductivity was measured by a Hot Disk Thermal Conductivity Analyzer, Hot Disk TPS 2500, with Probe Type 5501. The test was conducted at ambient (23°C) temperature. The thermal conductivity unit is expressed as Watts/meter Kelvin degrees temperature. | | |

It can be seen from Table 2 that a satisfactory heat conductivity was reported for experimental rubber Sample B of at least 0.6 W/mK which contained the graphite platelets as made therein without departing from the spirit or scope of the invention compared to control rubber Sample A of 0.2 W/mK which contained the rubber reinforcing carbon black instead of graphite platelets.

## Claims

1. A pneumatic tire comprising a directional heat conductive conduit comprising at least one heat conductive tire component (10, 11, 12) where said heat conductive tire conduit extends from an internal portion of the tire (1) to an external surface (9) of the tire and where at least one of said heat conductive tire component contains an outer atmospherically exposed surface of the tire (1), wherein said at least one heat conductive tire component of said directional conduit has a heat conductivity of at least 0.6 W/mK and contains a dispersion of heat conductive particles comprising at least one of exfoliated graphite platelets, carbon nanotubes, acetylene carbon black, boron nitride powder, carbonyl nickel powder, Al₂O₃, SiC, LiClO₄, zinc oxide and metal particles comprising at least one of nickel, copper, aluminum and iron powders.

2. The tire of claim 1 comprising a circumferential tread of a cap/base construction comprising an outer tread cap layer component (2) configured with lugs and intervening grooves (3) where an outer surface of the tread lugs contains the running surface of the tire, an underlying tread base layer component (8) which underlies said outer tread cap layer component (2), two spaced apart beads (7), a pair of tire sidewall components and a tire chafer component (13); wherein said at least one heat conductive tire component (11, 11, 12) of said directional heat conductive conduit comprises at least one of a tread base layer component, a tread peripheral shoulder component, a tire sidewall component, a tire chafer component and combinations thereof.

3. The tire of claim 1 or 2 wherein said heat conductive tire conduit comprises at least two interconnecting heat conductive tire components.

4. The tire of at least one of the previous claims where at least one heat conductive tire component (10, 11, 12) includes a peripheral tire tread shoulder.

5. The tire of at least one of the previous claims wherein said at least one heat conductive tire component (10, 11, 12) comprises:
(A) a combination of a tire sidewall (6) having an outer surface (9) to enable dissipation of heat conducted from an internal portion of the tire (1) together with a tread base layer component (8) joined to said tire sidewall (6) to enable conduction of internally generated heat from within the tire (1) to said tire sidewall (6); and/or
(B) a combination of a tread peripheral shoulder component (10) with an outer surface (9) to enable dissipation of heat conducted from an internal portion of the tire (1) together with a tread base layer component (8) to enable conduction of internally generated from within the tire (1) to the tread peripheral shoulder component (10).

6. The tire of at least one of the previous claims wherein the rubber composition of at least one of said heat conductive rubber components or said directional heat conductive conduit is a product of blending a pre-formed masterbatch comprising at least one conjugated diene-based elastomer and exfoliated graphite platelets with the same or at least one additional conjugated diene-based elastomer.

7. The tire of at least one of the previous claims wherein said directional heat conductive conduit comprises of one or more tire components comprising:
(A) a tread base layer tire component (8) which extends axially outward from an internal portion of the tire (1) axially outward to and including an external surface of the tire sidewall (6);
(B) a combination of a tread base layer component (8) which extends axially outward from an internal portion of the tire (1) to and including an outer tire sidewall layer tire component (6) containing an external surface (9) of the tire;
(C) a combination of a tread base layer component (8) which extends axially outward from an internal portion of the tire (1) to together with a peripheral tread shoulder component (10) of the tire (1) containing an external surface (9) of the tire (1);
(D) a tread shoulder component (10) containing an external tire surface;
(E) a tread base layer component (8) having a portion which extends radially outward into an outer tread cap layer component (2) to include an external tread groove surface contained in an outer tread cap layer component (2) exclusive of a running surface of the tire (1); and
(F) a tire chafer component (13) containing an outer tire rubber surface.

8. The tire of at least one of the previous claims wherein said heat conductive tire component comprises or consists of a rubber composition comprising at least one diene-based elastomer and containing a dispersion of from 0.5 to 60, alternatively from 2 to 40, parts by weight per 100 parts by weight of said elastomer (phr) of said heat conductive particles and/or wherein said heat conductive tire component has a heat conductivity of at least 1 W/mK.

9. The tire of at least one of the previous claims wherein the rubber composition of said heat conductive tire component (10, 11, 12) comprises:
(A) 100 phr of at least one diene-based elastomer,
(B) from 20 to 120 phr of a particulate reinforcing filler comprising:
(1) carbon black,
(2) silica such as precipitated silica, or
(3) combination of said carbon black and said silica;
(C) optionally a silica coupling agent for said silica containing a moiety reactive with hydroxyl groups on said silica and another, different, moiety interactive with said diene based elastomer(s), and
(D) from 3 to 30 phr of said heat conductive particles sufficient to provide a heat conductivity for the heat conductive tire component of at least 0.6 W/mK.

10. The tire of claim 1 or 9 wherein the rubber composition of the heat conductive tire component (10, 11, 12) contains silica, preferably precipitated silica, as a pre-treated silica comprising a silica pre-treated with at least one of bis(3-triethoxysilylpropyl) polysulfide containing an average in a range of from 2 toabout 4 connecting sulfur atoms in its polysulfidic bridge and of a alkoxyorganomercaptosilane.

11. The tire of at least one of the previous claims wherein the conjugated diene-based elastomer comprises at least one of polymers of at least one isoprene and 1,3-butadiene, of acrylonitrile and 1,3-butadiene and styrene with at least one of isoprene and 1,3-butadiene monomers.

12. The tire of claim 11 wherein at least one of said elastomers is a tin coupled elastomer.

13. The tire of at least one of the previous claims wherein at least one of said elastomers is a functionalized styrene/butadiene elastomer containing at least one functional group comprising:
(A) amine functional group reactive with hydroxyl groups on said silica,
(B) siloxy functional group, including end chain siloxy groups, reactive with hydroxyl groups on said silica,
(C) combination of amine and siloxy functional groups reactive with hydroxyl groups on said silica,
(D) combination of thiol and siloxy (e.g. ethoxysilane) functional groups reactive with hydroxyl groups on said silica,
(E) combination of imine and siloxy functional groups reactive with hydroxyl groups on said silica, and
(F) hydroxyl functional groups reactive with said silica.
